(19)

**Europäisches Patentamt**

**European Patent Office**

**Office européen des brevets**

(11)    **EP 4 618 349 A1**

(12)    **EUROPEAN PATENT APPLICATION**

(43) Date of publication:
**17.09.2025   Bulletin 2025/38**

(21) Application number: **24163189.4**

(22) Date of filing: **13.03.2024**

(51) International Patent Classification (IPC):
*H02J 3/14* (2006.01)      *H05B 47/17* (2020.01)
*H02M 1/42* (2007.01)      *H02J 3/32* (2006.01)
*H02J 9/06* (2006.01)      *H05B 45/355* (2020.01)
*H04L 12/28* (2006.01)

(52) Cooperative Patent Classification (CPC):
**H05B 47/17; H02J 3/14;** H02J 3/32; H02J 9/061;
H02J 2310/52; H02J 2310/56; H02J 2310/58;
H02J 2310/60; H02M 1/42; H04L 2012/285;
H05B 45/355

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Tridonic GmbH & Co. KG**
**6851 Dornbirn (AT)**

(72) Inventors:
• **Stark, Stefan**
**6851 Dornbirn (AT)**
• **Schneider, Miguel Philipp**
**6851 Dornbirn (AT)**

• **Saccavini, Lukas**
**6851 Dornbirn (AT)**
• **Auer, Hans**
**6851 Dornbirn (AT)**
• **Kucera, Clemens**
**6851 Dornbirn (AT)**
• **Romano, Fabio**
**6851 Dornbirn (AT)**

(74) Representative: **Beder, Jens**
**Mitscherlich PartmbB**
**Patent- und Rechtsanwälte**
**Karlstraße 7**
**80333 München (DE)**

Remarks:
Amended claims in accordance with Rule 137(2)
EPC.

(54)    **LINE CYCLE SKIPPING FOR REDUCING GRID LOAD DURING SYSTEM-DEPENDENT POWER PEAKS**

(57)    An electronic device, such as an LED driver, including a mains interface connected with a mains grid, a power factor correction circuit and a control circuit configured to switch the power factor correction circuit into a line cycle skipping, LCS, operational mode based on a signal including information on an increased load demand to the mains grid caused by at least one other device (such as an electric motor). While operating in the LCS operational mode, the at least one electronic device reduces or inhibits a power input from the mains grid for at least a first part of at least one line cycle of the mains grid. An increased load demand can be based on monitoring mains voltage or mains current.

FIG. 2

EP 4 618 349 A1

**Description**

The disclosure is in the field of electric devices supplied via an AC power grid and including power factor correction. In particular, the disclosure concerns a method for operating an electronic device, the electronic device, a luminaire, and an electronic system.

In buildings, a plurality of infrastructure systems including power converters operate from a mains grid, which supplies AC power, and the power converters themselves generate and supply DC power to a plurality of consuming devices including lighting modules and electric motors for operating, e.g., shading devices, HVAC devices, elevators, household appliances, computers, or even working machines in a factory environment.

Some of the consuming devices, e.g., lighting modules of luminaries, draw continuously energy from the mains grid. Switched mode power supplies (SMPS) and driver devices (LED converters) providing a LED current to lighting modules represent a base load of the mains grid.

Other consuming devices draw for a short time period a particular high current from the mains grid immediately after starting to operate. This specific behavior is characteristic for electric motors, which present a significant inductive load when starting. In this case, the mains grid experiences significant additional load for a short time, which may result, e.g., in current peaks and, in consequence, mains voltages drops on the mains grid.

The design of the mains grid as well as the building infrastructure systems has to take account of the base load by continuously -operating devices and further of a short time additional load generated by non-continuously-operating devices in order to mitigate effects such as mains overload and tripping of fuses and circuit protection devices. In consequence, either a desired expansion of building infrastructure systems may be prevented by a lack of a mains capacity, or additional cost for improving the mains grid may arise in order take account of additional consuming devices supplied by the mains grid.

It is an object of the invention to improve infrastructure systems that include continuously and discontinuously operating devices based on the mains grid and to avoid the aforementioned disadvantages.

The method for controlling an electronic device according to claim 1, the electronic device, the luminaire, and the system according to the corresponding independent claims provide advantageous solutions to the aforementioned problems.

The dependent claims define further advantageous embodiments.

The first aspect concerns the method for controlling at least one electronic device driving an electric load. The at least one electronic device includes a mains interface connected with a mains grid and a power factor correction circuit. The method comprises switching the at least one electronic device into a line cycle skipping operational mode based on a signal including information on an increased load demand to the mains grid by at least one other device. While operating in the line cycle skipping operational mode, the at least one electronic device reduces or inhibits a power input from the mains grid for at least a first part of at least one line cycle of the mains grid.

The line cycle skipping operational mode is an operational mode of a stage, in particular a power factor correction (PFC) circuit of an electronic driver device, in which during at least one cycle of the AC mains grid no energy is drawn from the mains grid. Hence, while operating in the line cycle skipping operational mode (LCS mode), subsequent stages (second stage) of the electronic device are supplied with DC energy from capacitors supporting a DC link between the first stage and the second stage only. Operating in the LCS mode essentially results in disregarding one or plural line cycles of the AC mains grid for supplying the electronic device. During at least one other line cycle of the of the AC mains grid, the electronic device acquires an increased amount of energy to compensate for the at least reduced amount of energy during the skipped line cycle(s).

The method provides an advantageous solution by using the LCS approach in order to decrease the base load of the mains grid, which electronic devices represent, for a time during which a significant additional load is present. Hence, without adversely affecting the function of the electronic devices, e.g., providing a LED current to lighting modules, the additional current peak for starting further consuming devices, e.g., electric motors operating shading devices (blinds) is provided.

Reducing the base load in critical times enables to expand a system, e.g., by adding further luminaires, without suffering from a mains grid overload when other devices start operating and generate short time peaks in power demand to the mains grid.

The system may be expanded by adding further electronic devices without having to increase the supply capacity of the mains grid proportionally.

The system stability of the mains grid supplying the system is increased.

An implementation of the method applying an LCS mode for a limited time in the PFC circuit of an electronic device may prove in particular advantageous, as the LCS mode also enables to improve total harmonic distortion (THD) characteristics of the electronic device. The LCS mode may therefore form part of a PFC circuit of an electronic device for further reasons and achieving further advantages.

The method according to an embodiment comprises switching the at least one electronic device back from the line cycle skipping operational mode into a standard operational mode. In the standard operational mode, the at least one electronic device is configured to compensate the reduced or inhibited power input in the a first part of at least one line cycle of the mains grid by increasing a power input from the mains grid for at least one second part of the at least one line cycle of the mains grid.

According to an embodiment, the method comprises switching the at least one electronic device back from the line cycle skipping operational mode into a standard operational mode in response to determining that a predetermined time since switching into the line cycle skipping mode has elapsed.

The method according to an embodiment comprises switching the at least one electronic device back from the line cycle skipping operational mode into a standard operational mode in response to determining that the increased load demand to the mains grid has ended.

In the standard operational mode, the electronic device draws energy from the mains grid in all line cycles of the mains grid voltage and mains grid current.

Switching the at least one electronic device back from the line cycle skipping operational mode into the standard operational mode in response to a predetermined time since switching into the line cycle skipping mode has elapsed may be easily implemented using a timer. The timer often forms part of a control circuit, e.g. often including at least one of a microcontroller or ASIC, of the electronic device or of the PFC circuit.

Alternatively, in case of switching the at least one electronic device back from the line cycle skipping operational mode into the standard operational mode in response to determining that the increased load demand to the mains grid has ended ensures that the base load to the mains grid is reduced by the at least one electronic device operating in the LCS mode as long as necessary to cope with the increased load demand to the mains grid. However, it is noted that the time of operating in the LCS mode in response is restricted to a short period of increased load demand to the mains grid, e.g. a load peak, and does not enable to cope with a long duration of increased load.

The method according to an embodiment comprises monitoring a mains voltage, determining based on the monitored mains voltage whether a predetermined event indicating an increased load demand to the mains grid occurs, and, in case of determining that the predetermined event occurs, generating the signal including information on an increased load demand.

Monitoring a supply voltage at a mains grid interface of the electronic device is part of many electronic devices, e.g. driver devices for lighting applications. Extending the available supply voltage monitoring by integrating a pattern recognition for determining events that at least one other device representing a large consumer, e.g. due to its internal inductances, has been added, activated or switched on the mains grid supplying the electronic device. The existing control circuit of the electronic device or the PFC circuit may add the capability to acquire a voltage curve of the supply voltage over time, compare the acquired voltage curve with a predetermined voltage pattern over time indicating a suddenly increased power demand on the mains grid, and generate the signal including information on the increased power demand. Hence, the monitoring capability represents a cost effective extension in terms of manufacturing cost of the current electronic device.

Integrating the measuring capability and initiation of switching into the electronic device enables to enhance existing systems in the field by replacing the current electronic device with an electronic device implementing the approach of the embodiment.

According to an embodiment, the method comprises monitoring a mains current of the mains grid, determining whether an increase of the monitored mains current indicates an increased load demand to the mains grid, and, in case of determining the increase of the monitored mains current, generating the signal including information on an increased load demand.

Monitoring, e.g., measuring the mains current in the mains grid separate and independent from the electronic device enables to implement a central generation of the signal including the information on an increased load demand and communicating the signal to a plurality of electronic device integrating the capability to switch operating in the LCS mode. The embodiment thereby increases the potentially short-time reduction of the base load to the mains grid without having to monitor the mains voltage and to generate the signal indicating an increased load demand in each electronic device of a system independently. Monitoring the mains current may be performed by measuring the current in the respective line of the mains grid, In case of a sudden rise (sudden increase) of the measured current value, e.g. the current increase per time exceeds a predetermined threshold, the method determines a sudden load peak to occur. Given this sudden load peak, the method proceeds with generating and outputting the signal indicating an increased load to the electronic devices, which in turn switch into the LCS mode.

The method according to an embodiment comprises generating the signal including information on an increased load demand based on a received signal including information on a switching state of at least one component of a system including the at least one electronic device.

This embodiment is in particular advantageous when implemented in a system comprising a plurality of electronic devices communicating in a network, e.g., a DALI network. In a smart home system, e.g., the electric drives operating shading devices (blinds) may generate and output a signal including information on an increased load demand, in response to an activation by user or controller. The generated signal is then transmitted via the network to the electronic devices for switching into the LCS mode. This embodiment is easily integrated in existing smart home systems, and enables in particular a timely switching into the LCS mode for decreasing the base load to the mains grid, e.g. represented by LED driver devices of a lighting system in a building.

According to an embodiment, the method includes generating the signal including information on an increased load demand based on a received signal including information on an event predicting an increased load demand of at least one component of a system including the at least one electronic device.

In this embodiment, a sensor, e.g., a movement detector detects an event that enables to conclude that the detected event will result in an action that is associated with an immediate increase in the load to the mains grid. For example, the movement detector detects a person moving towards a door that opens automatically operated by electric motor(s).

The method according to an embodiment controls the electronic device, wherein the electronic device is a driver device, in particular an AC/DC converter, a light driver, or a switched mode power supply.

In a second aspect, an electronic device for driving an electric load comprises a mains interface configured to connect the electronic device to a mains grid, a power factor correction circuit, and a control circuit. The control circuit is configured to switch the power factor correction circuit into a line cycle skipping operational mode based on a signal including information on an increased load demand to the mains grid by at least one other device. The control circuit is configured to switch the power factor correction circuit into a line cycle skipping operational mode based on a signal including information on an increased load demand to the mains grid caused by at least one other device. While operating in the line cycle skipping operational mode, the at least one electronic device reduces or inhibits, a power input from the mains grid for at least a first part of at least one line cycle of the mains grid.

A luminaire according to the third aspect comprises at least one electronic device according to the second aspect.

In a fourth aspect, a system including at least one electronic device according to the second aspect further comprises at least one other device configured to obtain energy from the mains grid. The at least one other device is configured to obtain a varying amount of energy from the mains grid. The device, for example, draws a current for a short amount of time. Such a device may include an inductance.

According to an embodiment of the system, the at least one other device includes at least one electric motor.

The system including the electronic device according to an embodiment includes a control device configured to determine the increased load demand to the mains grid by the at least one other device. The control device is configured to generate the signal including the information indicating the increased load demand by the at least one other device in case of determining the increased load demand to the mains grid, and to output the generated signal to the at least one electronic device.

The electronic device according to the second aspect, the luminaire according to the third aspect, and the system according to the fourth aspect achieve corresponding advantageous effects as discussed with reference to the method of the first aspect.

The following description of embodiments refers to the figures, in which

Fig. 1 provides an overview of the architecture of a LED driver device as an example of an electronic device in an embodiment;

Fig. 2 illustrates a time behavior of electric currents in an application example of an embodiment illustrating advantages in an application of an embodiment in building infrastructure systems;

Fig. 3 presents an overview over the architecture of an electronic device in a first embodiment;

Fig. 4 presents an overview over the architecture of an electronic device in second embodiment;

Fig. 5 illustrates a first example for controlling switching into a LCS operational mode of an electronic device according to an embodiment;

Fig. 6 illustrates a second example for controlling switching into the LCS operational mode of an electronic device according to an embodiment;

Fig 7 illustrates a third example for controlling switching into the LCS operational mode of an electronic device according to an embodiment;

Fig 8 shows a flowchart illustrating a first application example of the method for controlling the electronic device according to an embodiment; and

Fig 9 shows a flowchart illustrating a second application example of the method for controlling the electronic device according to an embodiment.

In the figures, corresponding elements have the same reference signs. The discussion of the figures avoids discussion of same reference signs in different figures wherever considered possible without adversely affecting comprehensibility and avoiding unnecessary repetitions for sake of conciseness.

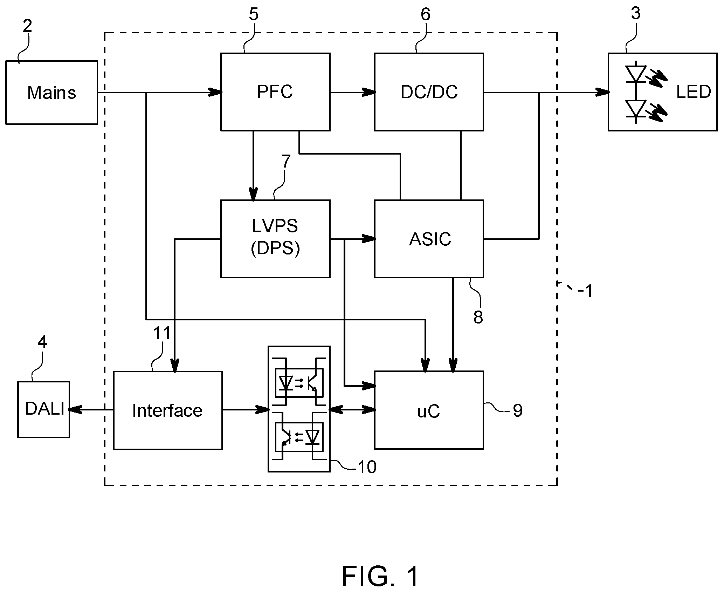

Fig. 1 provides an overview of the architecture of a LED driver device 1 as an example of an electronic device in an embodiment.

The LED driver device 1 is one specific example of an electronic device suitable for implementing the invention. Nevertheless, the disclosure is not limited to the LED driver device 1. Alternate embodiments of the electronic device may include a driver device, a switched mode power supply (SMPS), or other types of AC /DC converter devices.

The LED driver device 1 has a mains interface not explicitly shown in fig. 1 for connecting the LED driver device 1 with the mains grid 2. The mains grid 2 supplies not only the LED driver device 1 with a mains supply current $I_{mains}$ at a mains supply voltage $U_{mains}$, but also other electric devices including, but not limited to further LED driver devices 1 and other electronic devices. The at least one other device may include, e.g., SMPS, driver devices, electric motors supplied via the mains grid 2 with electric power.

The LED driver device 1 includes a communication interface 11. The communication interface 11 enables transmitting and receiving communication signals via a wired or wireless communication network, which may operate based on at least at least one of a DALI lighting network 4, DALI 2, DALI+, DiiA, D4i, KNX, ProfiNet, ProfiBus, Bluetooth, WLAN, Wifi, Thread, Matter, or corresponding standards in the fields of lighting systems, communication systems, and smart home systems.

The LED driver device 1 generates and outputs a load current, in particular a LED current $I_{LED}$ to at least one lighting module 3. The LED current $I_{LED}$ is a DC current supplying at least one, usually a plurality of LEDs of the lighting module 3, which may be arranged in series or in parallel or in a combination of series and parallel circuit configuration.

The LED driver device 1 includes a control circuit, which in the illustrated example of fig. 1 includes a microcontroller 9 and an ASIC 8. The control circuit includes also a memory providing data storage capacity for storing information. The memory may form part of the microcontroller 9 or be separate from the microcontroller 9.

The microcontroller 9 may, as indicated in fig. 1, monitor at least one of the mains supply current $I_{mains}$ or the mains supply voltage $U_{mains}$ provided via the mains interface from mains grid 2 to the LED driver device 1.

The microcontroller 9 may, as indicated in fig. 1, receive and transmit communication signals via the communication interface 4.

The LED driver device 1 may be adapted to fulfil SELV requirements and implement a SELV barrier as indicated in fig. 1 by the optocoupler 10, which isolates galvanically the communication interface 11 on a primary side of the SELV barrier from the microcontroller 9 on a secondary side of the SELV barrier.

For the following description of embodiments, the structure of the power supply path of the LED driver device 1 is of particular interest. The power supply path includes a power factor correction circuit 5 (PFC circuit 5), followed by a DC/DC converter circuit 6.

The LED driver device 1, as an example for the electronic device implementing an embodiment, is configured to reduce or even suppress (inhibit entirely) the power input (power consumption) of the PFC circuit 5 for at least one half-cycle, or a plurality of half-cycles of the mains supply current $I_{mains}$ input to the LED driver device 1 via the mains interface.

The control circuit, e.g. the ASIC 8 forming part of the control circuit of the LED driver device 1 may reduce or even suppress (inhibit entirely) the power input (power consumption) of the PFC circuit 5 for at least one half-cycle, or a plurality of half-cycles of the mains supply current $I_{mains}$. Alternatively, a control circuit of another component of the LED driver device may control the PRC circuit 5 to reduce or even suppress (inhibit entirely) the power input (power consumption) of the PFC circuit 5 for at least one half-cycle, or a plurality of half-cycles of the mains supply current $I_{mains}$.

The LED driver device 1 as an example for the electronic device implementing an embodiment is configured to admit or to increase the power input (power consumption) of the PFC circuit 5 for at least one other half-cycle, or a plurality of other half-cycles of the mains supply current $I_{mains}$ input to the LED driver device 1 via the mains interface.

The LED driver device 1 as an example for the electronic device implementing an embodiment is configured to distribute the reduction in power input (power consumption) of the PFC circuit 5 for the at least one half-cycle, or the plurality of half-cycles of the mains supply current $I_{mains}$ onto the at least one other half-cycle, or the plurality of other half-cycles of the mains supply current $I_{mains}$ in order to compensate the reduction in power input (power consumption) of the PFC circuit 5 for the at least one half-cycle, or the plurality of half-cycles of the mains supply current $I_{mains}$.

The LED driver device 1 may perform the compensation of the reduced power input of the PFC circuit 5 while operating in the LCS mode in particular in the immediately following line cycles of the mains grid 2 after switching back into the standard operational mode.

In other terms, the LED driver device 1 is set up to greatly reduce or completely prevent a power consumption by the PFC circuit filter 5 for at least one first part of a line cycle with respect to at least one line cycle of the mains grid 2. In particular, the LED driver device 1 is configured to reduce or completely prevent the power consumption by the PFC circuit filter 5 from the mains grid 2 for at least one half-cycle of the mains grid 2.

The LED driver device 1 or one of its components may include a control circuit, which is configured control the switching process between the LCS mode and the standard operational mode. Such control circuit may further realize analogously at least some of the further features described below.

Additionally, the LED driver device 1 is configured to distribute a power, which might have been drawn during the at least one omitted line cycle of a number of line cycles according to a pattern, after switching back into the standard operational mode.

Furthermore, the LED driver device 1 may be configured to increase or completely permit the power consumption of the PFC circuit 5 for at least one second part of at least one correspondingly different line cycle to the first part of at least one line cycle. Preferably, the LED driver device 1 may be configured to increase or permit the power consumption of the PFC circuit 5 for f the correspondingly remaining line cycles, with respect to the number of line cycles.

With regard to the strong reduction or complete suppression of the power consumption of the PFC circuit 5, it is noted that it is particularly advantageous if the power consumption of the PFC circuit 5 is reduced or completely suppressed depending on a respective load of the LED driver device, represented by the lighting module 3 in the embodiment of fig. 1.

Concerning reducing or completely suppressing the power consumption of the PFC circuit 5 depending on the actual load of the LED driver device 1, the first part of the number of omitted line cycles may be varied based on the current load of the LED driver device 1.

Advantageously, the PFC circuit 5 draws the mains current $I_{mains}$, preferably a current with a sinusoidal waveform, from the mains grid 2 by greatly increasing or completely allowing the power consumption of the PFC circuit 5.

Furthermore, the LED driver device 1 may generate the pattern, in particular generate the pattern randomly. In this case, the LED driver device 1 or the afore-mentioned control circuit may have a random generator.

Furthermore, the LED driver device 1 can, in particular as an alternative to generating or randomly generating the pattern, select the pattern from a number of patterns, in particular to select it randomly. In this example, the LED driver device 1 or the afore-mentioned control circuit may have a memory that stores a plurality of patterns, preferably a plurality of preconfigured patterns.

The plurality of patterns, in particular the number of preconfigured patterns, may be stored into the LED driver device 1, e.g., in the memory during manufacturing process of the LED driver device 1 or a commissioning process of a system, e.g., a lighting system or a building infrastructure system.

Furthermore, the LED driver device 1 may select a particular pattern from a number of patterns based on an identifier assigned to the LED driver device 1, or generate the pattern based on an identifier assigned to the LED driver device 1.

The PFC circuit 5 generates and outputs a DC voltage $U_{DC}$ and a DC current $I_{DC}$ based on the mains supply voltage $U_{mains}$ and the mains supply current $I_{mains}$. The PFC circuit 5 outputs the DC voltage $U_{DC}$ and the DC current $I_{DC}$ via a DC link 20 to the DC/DC converter 6.

The DC/DC converter 6 is an active electric component of the driver device 1. The DC/DC converter 6 corresponds to an electrically active component, which, using an electrical input signal provides an electrical output signal, which is different from the electric input signal. The input signal and the output signal of the DC/DC converter 6 can be electrical voltage signals. The DC/DC converter 6 preferably receives the output signal of the PFC circuit 5 as the input signal via the DC link 20.

In particular, the DC/DC converter 6 implements a dimming function of the LED lighting module 3 supplied by the DC/DC converter 6 by controlling the load current $I_{LED}$.

The DC/DC converter 6 may include at least a part of the control circuit.

The DC/DC converter circuit 6 may be implemented in a SMPS circuit topology.

The DC/DC converter 6 generates and outputs the load current $I_{LED}$ and the load voltage $U_{LED}$ for output via load interface (LED interface) to the lighting module 3. It is worth emphasizing in this context that the proposed technique for coping with an increased load demand to the mains grid 2 caused by at least one other device by switching the LED driver device 1 into a line cycle skipping operational mode does not affect the load current $I_{LED}$ output by the LED driver device 1. Instead, while operating in the LCS mode, the DC/DC converter 6 generates the load current $I_{LED}$ based on electric energy drawn from capacitors arranged on the DC link linking the PFC circuit 5 and the DC/DC converter 6. Hence, maintaining the load current $I_{LED}$ while simultaneously operating in the LCS mode also ensures a constant light output by the LEDs of the lighting module 3 without any notable flicker.

The PFC circuit 5 also supplies a low voltage power supply 7 (LVPS 5) with power. The LVPS 5 generates and outputs low voltages for supplying the other active components of the LED driver device 1, e.g., the communication interface 11, the ASIC 8 and the microcontroller 9.

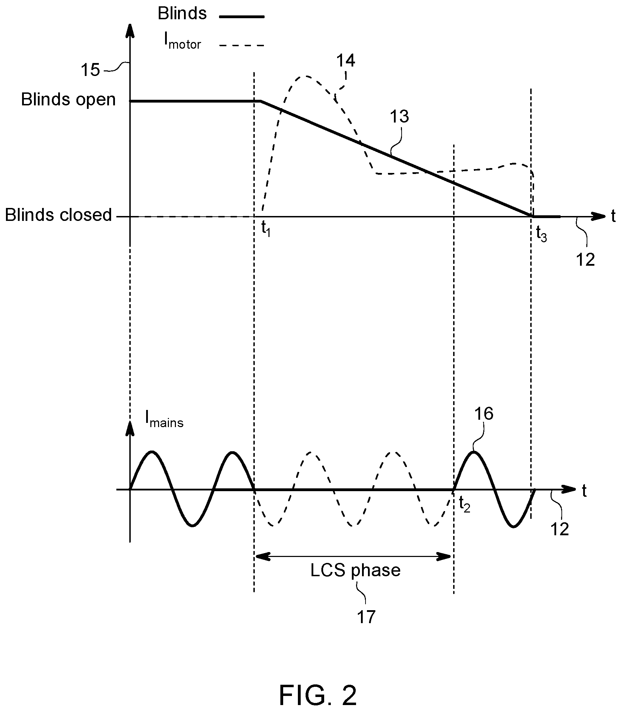

Fig. 2 illustrates a time behavior of electric currents illustrating advantages in an application of an embodiment in building infrastructure systems.

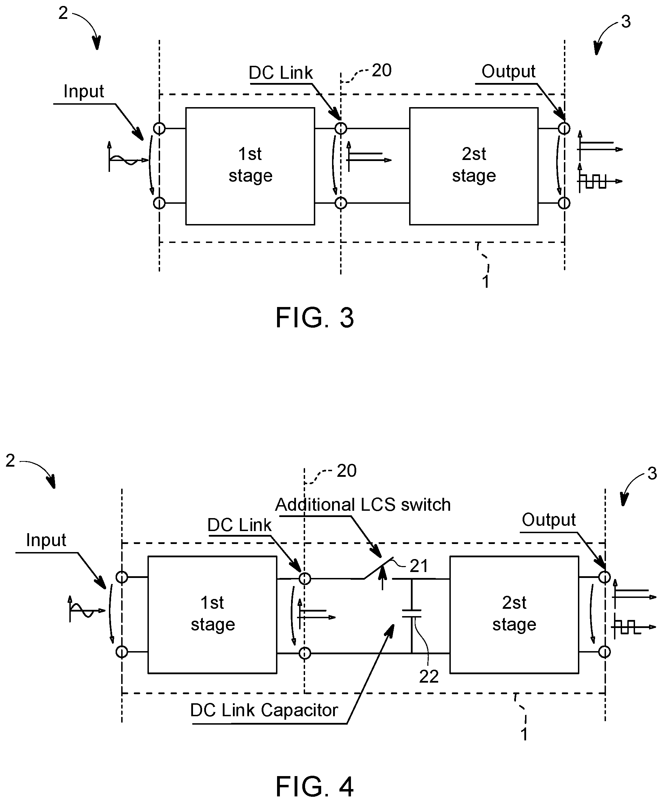

The building infrastructure system used for discussing the advantageous effects may include a lighting system and a shading system. The scenario underlying fig. 3 assumes the lighting system to include a plurality of luminaires arranged over the building, each luminaire including at least one lighting module 3 supplied by at least one LED driver device 1. The LED driver device 1 implements the technique of an embodiment of the disclosure.

Fig. 3 illustrates an overview over the architecture of an electronic device 1 connected to the mains grid 2 indicated on the input side of the device 1, and a lighting module 3 on its output side..

Assuming a plurality of lighting modules 3 being switched on, the lighting system during the time illustrated in fig. 2 on the abscissa 12 represents a base load to the mains grid 2 of the building.

The shading system includes blinds for shading the windows, which are operated by electric motors. The solid curve 13 of the upper part of fig. 2 illustrates the states of the blinds, including an open state, a continuous sequence of partially closed states, and a closed state. At the start time of fig. 2, the blinds are in an open state as indicated in the upper partial figure of fig. 2. At a time $t_1$, the shading system controls at least some of the blinds to start closing. Until the time $t_3$, the blinds are closing driven by the electric motors, and from time $t_3$ onwards, the blinds are in a closed state.

The upper part of fig. 2 also shows a curve 14 of the motor current $I_{motor}$ of the blinds with a dotted line. The ordinate axis 15 of fig. 2, in the upper part as well as in the lower part of fig. 2 shows a current. In the upper part of fig. 2, the current is the motor current $I_{motor}$. The motor current $I_{motor}$ is not constant or linear, but shows a characteristic current peak when the electric motors start to operate in order to close the corresponding blinds. After the current peak subsides, the motor current $I_{motor}$ is essentially constant until the blinds are fully closed at the time $t_3$.

The motor current represents an additional load to the mains grid 2. In particular, the current peak when the electric motors start to run require a significant capacity of the mains grid 2 to drive loads, which are idle when the blinds are not operated, e.g. moved between different states. The disclosed technique is particularly suited to handle the load peak ("impulse load") caused by the electric motors representing other devices than the LED lighting devices 1.

The shading system represents a non-continuous, additional load to the mains grid 2. The additional load may result in a mains overload situation, which even may result in a circuit breaker reacting to the mains overload situation by tripping. The disclosed approach enables to reduce or suspend the base load required by the LED driver devices 1 temporarily. The reduction in base load decreases the sum of base load and additional load. This avoids an overload scenario as discussed. Additionally this may enable to install additional consumers with expanding the capacity of the mains grid 2, e.g. further lighting modules 3.

In the lower part of fig. 2, the current shown on the ordinate axis 15 is the mains current $I_{mains}$ drawn by (input to) each of the LED drier devices 1 from the mains grid 2. As shown in the lower part of fig. 2, the LED driver device 1 switches the LED driver devices into the LCS mode based on a signal including information on the increased load demand to the mains grid 2 caused by the other devices, in the example of fig. 3, the electric motors operating the blinds. While operating in the LCS mode, the LED driver devices 1 at least reduce, in the shown example of fig. 2 entirely inhibit a power input from the mains grid 2 for at least a first part of at least one line cycle of the mains grid 2. In the specific example of fig. 2, the LED driver devices 1 fully inhibit the mains current $I_{mains}$ input to the PFC circuits 5 of the LED driver devices 1 during a predetermined time 17 of the LCS phase comprising five half-cycles of the mains grid 2. After the predetermined time 17 has elapsed, the LED driver devices 1 switch back from the LCS mode into a standard operational mode. In the standard operational mode, the LED driver devices compensate the reduced, in fig. 2 even fully inhibited power input in at least the first part of the at least one line cycle by increasing the power input from the mains grid 2 for at least a second part of a sequence of line cycles after time t3. This second part of an increased power input to the PFC circuit 5 is not specifically shown in fig. 2.

Fig. 2 illustrates the specific embodiment, in which the LED driver devices 1 switch back from the LCS mode into the standard operational mode in response to determining that a predetermined time since switching into the LCS mode has elapsed. The predetermined time displayed in fig. is the predetermined time 17 of the LCS phase includes five half-cycles of the line cycles of the mains grid 2, which extend from the time $t_1$ to the time $t_2$.

Alternatively, the LED driver devices 1 may switch back from the LCS mode into the standard operational mode in response to determining that the increased load demand to the mains grid 2 has subsided. In the specific example of fig. 2, a system controller controlling operations of the shading system may generate and output a signal at the time t3 indicating that the blinds arrived at their target state, corresponding to the closed state of the blinds. The LED driver device 1 or a controller of the lighting system may determine the time 17 of the LCS phase to extend from the time $t_1$ to the time $t_3$ and control the LED driver devices 1 of the lighting system accordingly. It is apparent that the capacitors connected to the DC link 20 connecting the PFC circuit 5 and the DC/DC converter 6 have to store enough electric energy in order to drive the DC current $I_{DC}$ to the DC/DC converter 6 without resulting in a drop in the load current ILED at the output of the DC/DC converter 6 within the time 17.

In an embodiment implementing a central control of the building infrastructure system, fig. 2 may be interpreted to show using system information, including e.g., sensor signals and command signals generated and output by a master controller of the building infrastructure system. The master controller system provides the relevant system information to the LED driver devices 1 via communication network. The LED driver devices 1 adapt a line cycle skipping algorithm (LCS algorithm) implemented in the LED driver devices 1 based on the system information received via the communication network accordingly. If, e.g., a brightness sensor controls the blinds of the shading system, the master controller may use sensor information from the brightness sensor directly. If the brightness sensor detects too much light outside a window and determines to close the blind of the window, the LED driver device 1 obtains the information on the intended closing of the blinds, e.g., in signal information received via a Bluetooth link from the master controller. The master controller then executes the task of closing the blinds starting at time $t_1$ (with timestamp $t_1$). Furthermore, the master controller provides a signal with information instructing switching into LCS mode to all LED driver devices 1 until time $t_2$ (timestamp $t_2$), or, e.g., until a specific numbers of x half-cycles of the mains grid has passed. In the example of fig. 2, the master controller may instruct the LED driver devices 1 to switch into the LCS mode for five half-cycles of the line cycles of the mains grid 2.

The master controller may generate the a signal including information on an increased load demand to the mains grid 2 caused by at least one other device based on switch-on commands for the electric motors. The switch-on commands for the electric motors may be generated based on command input received from a user, or from timer devices controlling operation of the electric motors, or a combination thereof.

Fig. 3 presents an overview over the architecture of an electronic device in a first embodiment.

Fig. 3 displays a partial view of the block diagram of fig. 1, with a focus on the DC link 20 connecting the PFC circuit 5, illustrated in generalized form as the 1st stage, and the DC/DC converter 6, illustrated in generalized form as the 2nd stage in fig. 3. The DC link 20, as shown in fig. 3, includes a direct connection for the DC voltage $U_{DC}$ and the DC current $I_{DC}$ without further circuit elements between the 1st stage and the 2nd stage.

It is noted that the capacitors providing the electric energy while the PFC circuit 5 resp. 1st stage is operating in the LCS mode, may be capacitors at the output and forming part of the PFC circuit 5, and/or at the input and forming part of the DC/DC converter 6, which not explicitly shown in fig.3.

The architecture of the DC link shown in fig. 3 is particularly advantageous for an implementation of the PFC circuit 5 as a boost-type PFC. The boost-type PFC outputs to the DC link 20 a voltage $U_{DC}$, e.g., about 400 V, which exceeds an voltage amplitude of the mains grid 2 at the input of the PFC circuit 5. In a typical example, the voltage amplitude at the input of PFC circuit 5 will amount to $230 Vrms \cdot \sqrt{2} \sim 325\ V$. As long as the voltage $U_{DC}$ at the DC link 20 exceeds the voltage amplitude at the input of the PFC circuit 5, the PFC circuit 5 will draw no current while in the LCS mode. This enables to dispense with arranging a switch between the PFC circuit 5, and the DC/DC converter device 6, contrary to the second embodiment shown in fig. 4.

However, even in case the PFC circuit 5 being implemented in boost topology, and capacity on the DC link which is small and a significant load at the load interface of the electronic device, a switch as illustrate in fig. 4 may become necessary, as in this particular case, the voltage UDC at the DC link 20 may be smaller than the voltage at the input of the PFC circuit 5.

Fig. 4 presents an overview over the architecture of an electronic device in a second embodiment.

Fig. 4 displays also a partial view of the block diagram of fig. 1, with a focus on the DC link 20 connecting the PFC circuit 5, illustrated in generalized form as the 1st stage, and the DC/DC converter 6, illustrated in generalized form as the 2nd stage. The DC link 20, as shown in fig. 4, differs from the first embodiment by arranging serially a switch 21 (LCS switch 21) in the connection for the DC voltage $U_{DC}$ and the DC current $I_{DC}$ between the 1st stage and the 2nd stage.

In the second embodiment, an additional capacitor 22 providing the electric energy while the PFC circuit 5 resp. 1st stage is operating in the LCS mode is depicted, which not explicitly shown in the first embodiment of fig.3.

The architecture of the DC link shown in fig. 4 is particularly advantageous for an implementation of the PFC circuit 5 in a different converter technology, e.g. as a flyback-type PFC. The flyback-type PFC may outputs to the DC link 20 a voltage $U_{DC}$, which is lower than the voltage amplitude of the mains grid 2 at the input of the PFC circuit 5. In order to avoid that the PFC circuit 5 draws a current via the mains interface while in the LCS mode, the LCS switch 21 will be switched into an open state when switching into the LCS mode. The switch will be closed again when switching the electronic device back from the LCS mode into the standard operational mode.

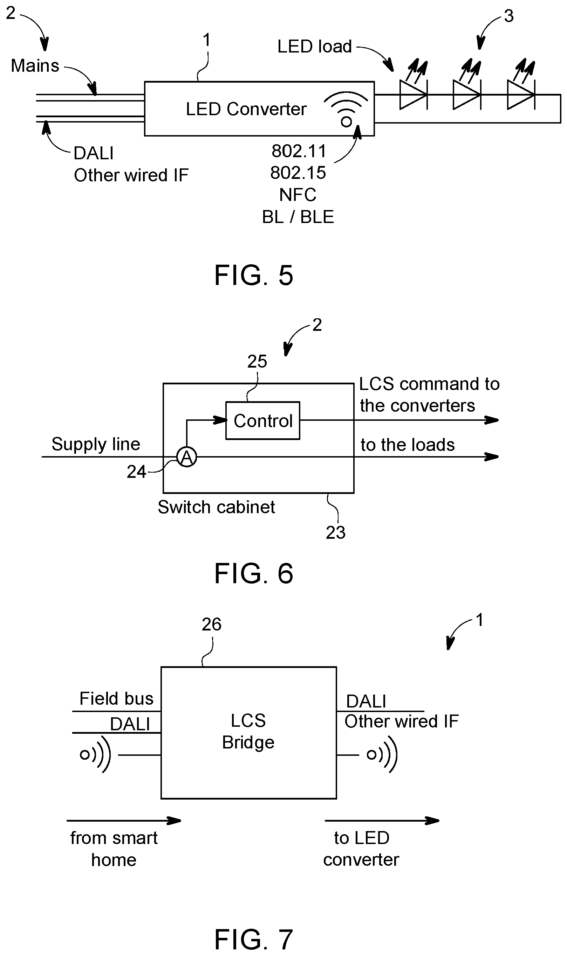

Fig. 5 illustrates a first example for controlling switching into a LCS operational mode of an electronic device.

The electronic device of fig. 5 is a LED driver device 1 that switches into the LCS mode based on a signal including information on an increased load demand to the mains grid 2 caused by at least one other device. The LED driver device 1 includes the mains interface and a communication interface 11.

The communications interface 11 enables the LED driver device 1 to communicate with other devices in a lighting system. The example of fig. 5 includes wired communication via a DALI lighting network and additionally via a wireless communication according to at least one standard of the families of communication standards including 802.11 (WLAN), 802.15 (WPAN, including, e.g., ZigBee, Thread 6LoWPAN), Bluetooth and Bluetooth Low Energy (BLE), NFC.

The LED driver device 1 may switch the into a line cycle skipping operational mode based on a signal including information on an increased load demand to the mains grid 2 caused by at least one other device. The LED driver device 1 may monitor the mains voltage $U_{mains}$ at the mains interface. The LED driver device 1 may then determine based on the monitored mains voltage $U_{mains}$ whether a predetermined event indicating an increased load demand to the mains grid 2 by another device supplied by the mains grid has occurred. In case of determining that the predetermined event has occurred, LED driver device 1 proceeds by generating the signal including information on an increased load demand caused by at least one other device.

In principle, the current LED driver device 1 cannot measure a high current load directly on the mains grid 2. The LED driver device 1 overcomes this problem by monitoring the mains voltage $U_{mains}$ in the embodiment of fig. 5. A high current load on the mains grid 2 will result in a small voltage drop of the mains voltage $U_{mains}$

due to the high current load. The LED driver device 1 is able to detect small voltage drop of the mains voltage $U_{mains}$ itself by constantly monitoring the shape of the mains voltage $U_{mains}$ at the mains interface of the LED driver device 1. The LED driver device 1 generates the signal including information on an increased load demand caused by the at least one other device in response to the detected voltage drop of the mains voltage $U_{mains}$ and activates the LCS mode in case of the detected voltage drop.

Although this approach for initiating the switch-over into the LCS mode may have the disadvantage that the LCS mode can only be activated when the high mains current $I_{mains}$ due to the additional load demand on the mains grid 2 is already flowing, switching into the LCS mode by the LED driver device 1 relieves the load to the mains grid 2 by reducing the base load to some extent.

An alternate or additionally implemented embodiment overcoming this issue is discussed with reference to fig. 6.

Fig. 6 illustrates a second example for controlling switching into the LCS operational mode of an electronic device according to an embodiment.

In fig. 6, a switching cabinet 23 of the mains grid 2, e.g. a switching cabinet of a building is shown. Within the switching cabinet 23, a measuring device 24 for measuring the mains current $I_{mains}$ is arranged and inserted directly in the power supply line between the power source for the building and the mains line to the consumers within the building. A controller 25 acquires a current measurement signal from the measuring device 24, and determines whether switching into the LCS mode by one, a part of, or all electronic devices arranged in the building is necessary due to a measured sudden increase in the monitored mains current $I_{mains}$. In case of determining that an increase of the monitored mains current indicates an increased load demand to the mains grid (), the controller 25 generates the signal including information on an increased load demand. The controller 25 includes a communication capability or is connected with an external communication module not shown in fig. 6, which enables the controller 25 to communicate with the communication interface 11 of the LED driver device 1, as indicted and discussed with reference to figure 1 and 5. The controller 25 then transmits the generated signal to the respective LED driver devices 1 or electronic devices in order to instruct them to switch into the LCS mode.

Fig 7 illustrates a third example for controlling switching into the LCS operational mode of an electronic device according to an embodiment.

In the example of fig. 6, the electronic device generates the signal including information on an increased load demand based on a received signal including information on a switching state of at least one component of a system including the at least one electronic device.

In the example of fig. 6, electronic device generates the signal including information on an increased load demand on the mains grid 2 based on a received signal including information on an event predicting an increased load demand of at least one component of a system including the at least one electronic device.

Underlying fig. 6 is the scenario of smart home systems or connected home systems that are connected in a network with a plurality of other (sub-) systems of the building infrastructure of current and future buildings. Such networks may be implemented by means of field bus systems such as KNX, ProfiNet, or Profibus, for example. There exist corresponding solutions based on non-wired system systems such as ZigBee, Bluetooth or Matter in private homes or in the business sector, e.g., factories. Fig. 7 shows an LCS Bridge 26, which enables to implement the techniques of the present disclosure. If a machine, e.g., including an electric motor, receives a command to start a specific type of operation, including, but not limited to starting operation of the at least one electric motor, via a communication channel of the system, the LCS Bridge 26 monitoring the communication channels of the system detects the command, evaluates the implication of the detected command, and determines to initiate at least one electric device, e.g. the LED driver devices 1 of the lighting devices, to switch into the LCS mode. In particular, the LCS bride 26 accordingly initiates the LCS mode for the connected LED driver devices by generating and transmitting the signal including information on a switching state of at least one component, e.g. the electric motor, to the communication interface 11 of the LED driver device 1.

The LCS bridge 26 of fig. 7 may be a separate device configured for determining a switching state or a change of state of at least one component of a system, or for generating information on an event predicting an increased load demand of at least one component of a system.

Alternatively, the functions of the LCS bridge 26 may be implemented at least in part by other smart home system components, including, e.g., Amazon Echo, Google nest.

Fig 8 shows a flowchart illustrating a first application example of the method for controlling the electronic device according to an embodiment.

Both fig. 8 and fig. 9 base on scenario in which three machines, e.g., each machine including at least one electric motor, and the lighting in a factory environment are active. The three working machines and the lighting switched on present a base load to the mains grid 2 supplying the factory. Then, fourth machine, e.g. also including at least one electric motor, is starting to operate.

In fig. 8, the machines and the lighting system may have central control. The central control includes at least the process of switching into operating in the LCS mode as discussed with reference to figs. 6 and 7, for example.

In step S1, the three machines A, B, C are running. The lighting is in the ON state and emitting light.

The fourth machine D is in the OFF state or in standby.

In step S2, the system, e.g., an LCS bridge 26 according to fig. 7, determines that the fourth machine D is instructed to start operating. The system determines that machine D will have to switch into the operating state. The system generates and transmits to the machines A, B, C a signal including information on a switching state of at least one component () of a system () including the at least one electronic device (). Alternatively, the system generates and transmits to the machines A, B, C the signal including information on an increased load demand to the mains grid 2 caused by at least one other device, which in this case is the machine D about to start operating.

In step S3, the machines A, B, C and the lighting, in particular the LED driver devices 1 supplying the lighting modules 3 of the luminaires generate the signal including information on an increased load demand based on the received signal including information on a switching state of at least one component, in fig. 8, the machine D of the system.

The machines A, B, C and the LED driver devices 1 then switch into operating in the LCS mode based on the generated signal including information on an increased load demand to the mains grid 2 caused by the machine 4.

Alternatively, in step S3, the machines A, B, C and the LED driver devices 1 then switch into operating in the LCS mode based on the received signal including information on an increased load demand to the mains grid 2 caused by the machine 4.

In step S4, the machine 4 starts to operate and enters a start-up phase. The start-up phase will include an increased load demand by the machine D to the mains grid. The base load represented by machines A, B, C and the lighting is decreased during the start-up phase due to machines A, B, C and the lighting operating the PFC circuits 5 of the electronic devices in the LCS mode.

In optional step S5, the system may wait a predetermined time until the start-up phase of machine D has terminated. Machine D is now also operating in the standard operational mode.

In step S6, the system instructs machine A, B, C and the lighting to switch back from operating in the LCS mode into the operating in standard operational mode in response to determining that the increased load demand to the mains grid 2 has ended. The machines A, B, C, D and the lighting operate in the standard operational mode.

The process flow of fig. 8 bases on a predicted line cycle skipping scenario that achieves particular good results in reducing the base load to the mains grid in order ensure a smooth start up process resulting in the additional load demand to the mains grid.

The prediction of the increased load demand may base on a planned switching-on of consumers such as blends of a building, which start up every morning at about the same time, machines which are switched on due to an incoming order, or machines which run time-controlled, in order to give some examples.

Fig 9 shows a flowchart illustrating a second application example of the method for controlling the electronic device according to an embodiment.

Fig. 9 has the corresponding underlying scenario of as fig. 8 in which three machines and the lighting in the factory environment are active. The three working machines and the lighting switched on present a base load to the mains grid 2 supplying the factory. In the scenario of fig. 9, the fourth machine, e.g. also including at least one electric motor, is starting to operate spontaneously, different to the scenario of fig. 8. In fig. 9, the machines and the lighting system lack the central control at least concerning the switching into operating in the LCS mode.

Step S1, three machines A, B, C, and the lighting in the factory environment are active.

In the scenario of fig. 9, the machine D starts operating spontaneously from the mains grid 2 in step S2.

In step S3, a sudden increase in the mains current $I_{mains}$ is determined. Determining the sudden increase in the mains current $I_{mains}$ may be done by detecting a sudden drop in the mains voltage $U_{mains}$. As discussed above. Based on the determined sudden increase in the mains current $I_{mains}$, a signal including information on an increased load demand to the mains grid 2 caused by machine D is generated and communicated to machines A, B, C and to the lighting system, e.g., the LED driver devices 1 of the lighting system.

In step S4, the machines A, B, C and the LED driver devices 1 of the lighting system into operating in the LCS mode based on a signal including information on an increased load demand to the mains grid 2 caused the machine D.

In the optional step S5, the system may wait a predetermined time until the start-up phase of machine D has terminated. Machine D is now also operating in the standard operational mode.

In step S6, the machines A, B, C and the lighting to switch back from operating in the LCS mode into the operating in standard operational mode in response to determining that the increased load demand to the mains grid 2 has ended. The machines A, B, C, D and the lighting now operate in the standard operational mode.

The process flow of fig. 8 bases on a spontaneous line cycle skipping scenario that achieves a reduction in the base load to the mains grid 2 in order ensure a smooth start up process resulting in the additional load demand to the mains grid 2.

All steps which are performed by the various entities described in the present disclosure as well as the functionalities described to be performed by the various entities are intended to mean that the respective entity is adapted to or configured to perform the respective steps and functionalities.

In the claims as well as in the description the word "comprising" does not exclude the presence of other elements or steps.

The indefinite article "a" or "an" does not exclude a plurality.

A single element or other unit may fulfill the functions of several entities or items recited in the claims. The mere fact that different dependent claims recite certain measures and features of the control circuit does not exclude that a combination of these measures and features cannot combined in an advantageous implementation.

The features described in the discussion of specific embodiments and depicted in the figures may be combined with each other for the invention defined in the attached claims.

**Claims**

1. Method for controlling at least one electronic device (1) driving an electric load (3), wherein the at least one electronic device (1) includes a mains interface connected with a mains grid (2), and a power factor correction circuit (5), and the method comprises

    switching the at least one electronic device (1) into a line cycle skipping operational mode based on a signal including information on an increased load demand to the mains grid (2) caused by at least one other device,
    wherein, while operating in the line cycle skipping operational mode, reducing or inhibiting, by the at least one electronic device, a power input from the mains grid (2) for at least a first part of at least one line cycle of the mains grid (2).

2. Method according to claim 1, wherein, the method further comprises

    switching the at least one electronic device (1) back from the line cycle skipping operational mode into a standard operational mode, wherein in the standard operational mode, the at least one electronic device is configured to compensate the reduced or inhibited power input in at least the first part of the at least one line cycle by increasing a power input from the mains grid (2) for at least a second part of the at least one line cycle.

3. Method according to claim 2, wherein the method comprises

    switching the at least one electronic device (1) back from the line cycle skipping operational mode into the standard operational mode in response to
    determining that a predetermined time since switching into the line cycle skipping mode has elapsed.

4. Method according to claim 2, wherein the method comprises

    switching the at least one electronic device (1) back from the line cycle skipping operational mode into the standard operational mode in response to
    determining that the increased load demand to the mains grid (2) has ended.

5. Method according to any of the preceding claims, wherein the method comprises

    monitoring a mains voltage,
    determining based on the monitored mains voltage whether a predetermined event indicating an increased load demand to the mains grid (2) occurs, and,
    in case of determining that the predetermined event occurs, generating the signal including information on an increased load demand caused by the at least one other device.

6. Method according to any of the preceding claims, wherein

    monitoring a mains current of the mains grid (2), determining whether an increase of the monitored mains current indicates an increased load demand to the mains grid (2), and,
    in case of determining the increase of the monitored mains current, generating the signal including information on an increased load demand.

7. Method according to any of the preceding claims, wherein the method comprises
generating the signal including information on an increased load demand based on a received signal including information on a switching state of at least one component of a system including the at least one electronic device.

8. Method according to any of the preceding claims, wherein
generating the signal including information on an increased load demand based on a received signal including information on an event predicting an increased load demand of at least one component of a system including the at least one electronic device.

9. Method according to any of the preceding claims, wherein
the electronic device is a driver device, in particular an AC/DC converter, a light driver, or a switched mode power supply.

**10.** Electronic device for driving an electric load (3), the electronic device comprises

a mains interface configured to connect the electronic device to a mains grid (2);
a power factor correction circuit (5);
a control circuit (8, 9); and
the control circuit (8, 9) is configured to switch the power factor correction circuit (5) into a line cycle skipping operational mode based on a signal including information on an increased load demand to the mains grid (2) caused by at least one other device,
wherein, while operating in the line cycle skipping operational mode, reducing or inhibiting, by the at least one electronic device, a power input from the mains grid (2) for at least a first part of at least one line cycle of the mains grid (2).

**11.** Luminaire including at least one electronic device according to claim 10.

**12.** System including at least one electronic device (1) according to claim 10, wherein

the system further comprises the at least one other device configured to obtain energy from the mains grid (2), and
the at least one other device (2) is configured to obtain a varying amount of energy from the mains grid (2).

**13.** System including the electronic device according claim 12, wherein
the at least one other device includes at least one electric motor.

**14.** System including the electronic device according any one of claims 12 or 13, wherein

the system includes a control device (25, 26) configured to determine the increased load demand to the mains grid (2) by the at least one other device,
wherein the control device (25, 26) is configured to generate the signal including the information indicating the increased load demand by the at least one other device in case of determining the increased load demand to the mains grid (2), and to output the generated signal to the at least one electronic device (1).

**Amended claims in accordance with Rule 137(2) EPC.**

**1.** Method for controlling at least one electronic device (1) driving an electric load (3), wherein the at least one electronic device (1) includes a mains interface connected with a mains grid (2), and a power factor correction circuit (5), and the method comprises

switching the at least one electronic device (1) into a line cycle skipping operational mode based on a signal including information on an increased load demand to the mains grid (2) caused by at least one other device, with central control of the at least one electronic device (1) and the at least one other device,
wherein, while operating in the line cycle skipping operational mode, reducing or inhibiting, by the at least one electronic device, a power input from the mains grid (2) for at least a first part of at least one line cycle of the mains grid (2).

**2.** Method according to claim 1, wherein, the method further comprises

switching the at least one electronic device (1) back from the line cycle skipping operational mode into a standard operational mode, wherein in the standard operational mode, the at least one electronic device is configured to compensate the reduced or inhibited power input in at least the first part of the at least one line cycle by increasing a power input from the mains grid (2) for at least a second part of the at least one line cycle.

**3.** Method according to claim 2, wherein the method comprises

switching the at least one electronic device (1) back from the line cycle skipping operational mode into the standard operational mode in response to
determining that a predetermined time since switching into the line cycle skipping mode has elapsed.

**4.** Method according to claim 2, wherein the method comprises

switching the at least one electronic device (1) back from the line cycle skipping operational mode into the standard operational mode in response to
determining that the increased load demand to the mains grid (2) has ended.

**5.** Method according to any of the preceding claims, wherein the method comprises monitoring a mains voltage,

determining based on the monitored mains voltage whether a predetermined event indicating an increased load demand to the mains grid (2) occurs, and,

in case of determining that the predetermined event occurs, generating the signal including information on an increased load demand caused by the at least one other device.

6. Method according to any of the preceding claims, wherein

monitoring a mains current of the mains grid (2), determining whether an increase of the monitored mains current indicates an increased load demand to the mains grid (2), and, in case of determining the increase of the monitored mains current, generating the signal including information on an increased load demand.

7. Method according to any of the preceding claims, wherein the method comprises generating the signal including information on an increased load demand based on a received signal including information on a switching state of at least one component of a system including the at least one electronic device.

8. Method according to any of the preceding claims, wherein generating the signal including information on an increased load demand based on a received signal including information on an event predicting an increased load demand of at least one component of a system including the at least one electronic device.

9. Method according to any of the preceding claims, wherein the electronic device is a driver device, in particular an AC/DC converter, a light driver, or a switched mode power supply.

10. Electronic device for driving an electric load (3), the electronic device comprises a mains interface configured to connect the electronic device to a mains grid (2);

a power factor correction circuit (5); a control circuit (8, 9); and the control circuit (8, 9) is configured to switch the power factor correction circuit (5) into a line cycle skipping operational mode based on a signal including information on an increased load demand to the mains grid (2) caused by at least one other device, with central control of the at least one electronic device (1) and the at least one other device, wherein, while operating in the line cycle skipping operational mode, reducing or inhibiting, by the at least one electronic device, a power input from the mains grid (2) for at least a first part of at least one line cycle of the mains grid (2).

11. Luminaire including at least one electronic device according to claim 10.

12. System including at least one electronic device (1) according to claim 10, wherein

the system further comprises the at least one other device configured to obtain energy from the mains grid (2), and the at least one other device (2) is configured to obtain a varying amount of energy from the mains grid (2).

13. System including the electronic device according claim 12, wherein the at least one other device includes at least one electric motor.

14. System including the electronic device according any one of claims 12 or 13, wherein

the system includes a control device (25, 26) configured to determine the increased load demand to the mains grid (2) by the at least one other device, wherein the control device (25, 26) is configured to generate the signal including the information indicating the increased load demand by the at least one other device in case of determining the increased load demand to the mains grid (2), and to output the generated signal to the at least one electronic device (1).

FIG. 1

FIG. 2

FIG. 3

FIG. 4

2

Mains

LED load

3

LED Converter

802.11
802.15
NFC
BL / BLE

DALI
Other wired IF

1

FIG. 5

2

25

Control

LCS command to
the converters

Supply line

to the loads

24 — A

Switch cabinet

23

FIG. 6

26

1

Field bus
DALI

o)))

LCS
Bridge

DALI
Other wired IF

— o)))

from smart
home

to LED
converter

FIG. 7

Europäisches Patentamt
European Patent Office
Office européen des brevets

## EUROPEAN SEARCH REPORT

Application Number

EP 24 16 3189

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/312804 A1 (FENKART KARL-HEINZ [AT]) 23 October 2014 (2014-10-23) | 1,2,4, 9-12,14 | INV. H02J3/14 H05B47/17 |
| Y | * paragraphs [0042] - [0072]; figures 1-4 * | 3,5-8,13 | |
| | * paragraphs [0006] - [0036] * ----- | | ADD. H02M1/42 |
| X | US 2014/091727 A1 (WESTERMARCK JOEL C [US]) 3 April 2014 (2014-04-03) | 1,3, 9-12,14 | H02J3/32 H02J9/06 |
| Y | * paragraphs [0008] - [0021]; figure 1 * ----- | 3 | H05B45/355 H04L12/28 |
| X | EP 2 692 210 B1 (LITONICS LTD [GB]) 21 June 2017 (2017-06-21) | 1,2,4,5, 9-12,14 | |
| Y | * paragraphs [0023] - [0030]; figures 1-3 * | 5 | |
| | * paragraphs [0048] - [0051], [0065]; figure 4 * * paragraphs [0055] - [0058]; figure 5 * * paragraph [0061] * ----- | | |
| X | US 2017/111981 A1 (RECKER MICHAEL V [US] ET AL) 20 April 2017 (2017-04-20) | 1,4,6, 9-12,14 | TECHNICAL FIELDS SEARCHED (IPC) |
| Y | * paragraphs [0049] - [0055]; figures 1,2 * ----- | 6 | H02M H02J |
| X | US 2011/118890 A1 (PARSONS KEVIN [US]) 19 May 2011 (2011-05-19) | 1,7,8, 12-14 | H05B H04L |
| Y | * paragraphs [0043] - [0062]; figures 4-7 * | 7,8,13 | |
| | * paragraphs [0092] - [0094]; figure 14 * * paragraphs [0163] - [0164] * ----- | | |

The present search report has been drawn up for all claims

| Place of search | Date of completion of the search | Examiner |
|---|---|---|
| Munich | 3 June 2024 | Ferla, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 3189

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2024

| Patent document cited in search report | Publication date | Patent family member(s) | Publication date |
|---|---|---|---|
| US 2014312804 A1 | 23-10-2014 | CN 103858300 A | 11-06-2014 |
| | | DE 102011080996 A1 | 21-02-2013 |
| | | EP 2745374 A2 | 25-06-2014 |
| | | US 2014312804 A1 | 23-10-2014 |
| | | WO 2013024090 A2 | 21-02-2013 |
| US 2014091727 A1 | 03-04-2014 | NONE | |
| EP 2692210 B1 | 21-06-2017 | CN 103621180 A | 05-03-2014 |
| | | EP 2692210 A2 | 05-02-2014 |
| | | GB 2489514 A | 03-10-2012 |
| | | GB 2489538 A | 03-10-2012 |
| | | JP 6058623 B2 | 11-01-2017 |
| | | JP 2014512647 A | 22-05-2014 |
| | | KR 20140023322 A | 26-02-2014 |
| | | US 2014015423 A1 | 16-01-2014 |
| | | WO 2012131366 A2 | 04-10-2012 |
| US 2017111981 A1 | 20-04-2017 | US 10624183 B1 | 14-04-2020 |
| | | US 11172565 B1 | 09-11-2021 |
| | | US 2012262093 A1 | 18-10-2012 |
| | | US 2017111981 A1 | 20-04-2017 |
| US 2011118890 A1 | 19-05-2011 | CA 2709627 A1 | 13-05-2011 |
| | | US 2011118890 A1 | 19-05-2011 |
| | | US 2013253721 A1 | 26-09-2013 |

EPO FORM P0459

For more details about this annex : see Official Journal of the European Patent Office, No. 12/82